# EUROPEAN PATENT SPECIFICATION

(11) **EP 2 667 536 B1**
(45) Date of publication and mention of the grant of the patent: **14.10.2020**
(21) Application number: 13168610.7
(22) Date of filing: 21.05.2013
(51) Int. Cl.: H04L 5/00, H04W 28/08, H04N 21/2385, H04N 21/2343, H04N 21/462, H04L 12/811, H04L 12/853, H04N 21/24, H04N 21/63

(54) **Method and system for adaptive streaming in a multipath environment.**
Verfahren und Vorrichtung zum adaptiven Streaming in einer Mehrpfadumgebung
Procédé et système pour la diffusion adaptative dans un environnement à voies multiples

(30) Priority: 22.05.2012 US 201213477959
(43) Date of publication of application: 27.11.2013
(73) Proprietor: The Boeing Company, Chicago, IL 60606-1596 (US)
(72) Inventor: Mohammad, Alimuddin, Sammamish, WA 98074 (US); Jung, Yi, Issaquah, WA 98027 (US); Rencher, Robert, Renton, WA 98057-0000 (US)
(74) Representative: Boult Wade Tennant LLP

(56) References cited:
- WO-A1-03/071806
- WO-A1-2008/050220
- RADHA H ET AL: "Scalable Internet video using MPEG-4", SIGNAL PROCESSING. IMAGE COMMUNICATION, ELSEVIER SCIENCE PUBLISHERS, AMSTERDAM, NL, vol. 15, no. 1-2, 1 September 1999 (1999-09-01), pages 95-126, XP004180640, ISSN: 0923-5965, DOI: 10.1016/S0923-5965(99)00026-0

## Description

### Background

The subject matter described herein relates to communication networks, and more particularly to adaptive multipath content streaming in communication networks. Video capture and processing systems with multiple interfaces may have multiple paths for transmission viz., the public internet, overlay networks, and/or private wired/wireless networks; and may transmit content including data, audio, images, and video streams over one or more of these available communication networks. The amount of bandwidth available for data transmission may vary widely as a function of the location of the video capturing and distribution system. Accordingly, systems and methods to manage content distribution in a variable environment may find utility.

Radha et al., "Scalable Internet video using MPEG-4*"* describes an MPEG-4 based scalable video coding method using both a prediction-based base layer and a fine-granular enhancement layer to provide real-time streaming of audio-visual content over Internet Protocol based networks.

WO 2003/071806 A1, in accordance with its abstract, states "the present invention is directed to a system and method for delivery of encoding video data over a data network such as an IP network. In addition to having a server capable of sending multiple layers of data into the data network, the system comprises adaptive nodes located intermediate the server and clients located downstream of the adaptive node where these clients may be receivers and/or other adaptive nodes. Receivers and adaptive nodes may be capable of analyzing network capacity by perceiving network congestion conditions of the data network at that device and dynamically changing the channel subscriptions to which the receiver and/or the adaptive node have subscribed based on the perceived network congestion conditions. It is emphasized that this abstract is provided to comply with the rules requiring an abstract which will allow a searcher or other reader to quickly ascertain the subject matter of the technical disclosure. It is submitted with the understanding that it will not be used to interpret or limit the scope of meaning of the claims".

WO 2008/050220 A1, in accordance with its abstract, states "a higher network sends a base stream of a data stream to a first network node, and sends an enhancement stream of the data stream to a second network node. The first network node transmits the base stream over a multicast channel and the second network node transmits the enhanced stream in synchronism with the transmitted base stream over a unicast channel. Various options are detailed for how this synchronism is achieved, and the second network node need only transmit the higher bit-rate enhancement stream on user request or if network conditions permit. A user equipment receives the base and enhancement streams, combines them, and displays the combined stream to a user at a graphical display interface. Various apparatus, methods, and computer programs are detailed for various nodes and the user equipment"..

### Summary

Systems and methods for adaptive multipath content streaming in communication networks are disclosed.

In a first aspect, a computer-based method to manage content streaming from a sender to a receiver through multiple networks comprising: splitting an encoded content stream into a plurality of parallel content streams including a first content stream and a second content stream, wherein the first content stream comprises a base layer and at least a first additional layer, wherein the base layer contains a low-bandwidth content stream and reference information for additional layers, and wherein the second content stream comprises the base layer and at least a second additional layer; and transmitting at least one of the first content stream or the second content stream from the sender to the receiver based at least in part on an available bandwidth parameter.

In a second aspect, a computer-based system to manage content streaming from a sender to a receiver through multiple networks , comprising: a processor; logic instructions stored in a tangible computer-readable medium coupled to the processor which, when executed by the processor, configure the processor to split an encoded content stream into a plurality of parallel content streams including a first content stream and a second content stream, wherein the first content stream comprises a base layer and at least a first additional layer, wherein the base layer contains a low-bandwidth content stream and reference information for additional layers, and wherein the second content stream comprises the base layer and at least a second additional layer; and a transmitter to transmit at least one of the first content stream or the second content stream from the sender to the receiver based at least in part on an available bandwidth parameter.

In an example, a computer program product comprises logic instructions stored in a tangible computer-readable medium coupled to a processor which, when executed by the processor, configure the processor to split an encoded content stream into a plurality of parallel content streams including a first content stream comprising a base layer and at

least a first additional layer, wherein the base layer contains a low-bandwidth content stream and reference information for additional layers and a second content stream comprising the base layer and at least a second additional layer, and forward the first content stream and second content stream to a transmitter to transmit at least one of the first content stream or the second content stream from a sender to a receiver based at least in part on an available bandwidth parameter.

With regard to the first aspect, optionally, the method further comprises determining whether multiple communication channels are available between the sender and the receiver, and in response to a determination that only a single communication channel is available: determining an available bandwidth on the single communication channel between the sender and the receiver, and selecting a content stream from the plurality of parallel content streams based at least in part on the bandwidth required by the content stream.

Optionally, the method further comprises receiving the content stream in the receiver, decoding the content stream, and presenting the content stream on a display.

Optionally, the method further comprises determining whether multiple communication channels are available between the sender and the receiver, and in response to a determination that multiple communication channels are available, determining an available bandwidth on the multiple communication channels between the sender and the receiver, and selecting a content stream from the plurality of parallel content streams for the respective multiple communication channels based at least in part on the bandwidth required by the content stream. Optionally, the method further comprises transmitting the plurality of parallel content streams across the multiple communication channels.

Optionally, the method further comprises receiving the plurality of parallel content streams in the receiver, buffering the plurality of parallel content streams in a buffer, and combining the plurality of parallel content streams to create a combined content stream in the receiver. Optionally, the method further comprises decoding the combined content stream, and presenting the decoded combined content stream on a display.

With regard to the second aspect, optionally, the computer-based system further comprises logic instructions stored in a tangible computer-readable medium coupled to the processor which, when executed by the processor, configure the processor to: determine whether multiple communication channels are available between the sender and the receiver, and in response to a determination that only a single communication channel is available: determine an available bandwidth on the single communication channel between the sender and the receiver, and select a content stream from the plurality of parallel content streams based at least in part on the bandwidth required by the content stream.

Optionally, the computer-based system further comprises a receiver to receive the content stream, a processor coupled to the receiver, and logic instructions stored in a tangible computer-readable medium coupled to the processor which, when executed by the processor, configure the processor to decode the content stream, and present the content stream on a display.

Optionally, the computer-based system further comprises logic instructions stored in a tangible computer-readable medium coupled to the processor which, when executed by the processor, configure the processor to determine whether multiple communication channels are available between the sender and the receiver, and in response to a determination that multiple communication channels are available, determine an available bandwidth on the multiple communication channels between the sender and the receiver, and select a content stream from the plurality of parallel content streams for the respective multiple communication channels based at least in part on the bandwidth required by the content stream. Optionally, the computer-based system further comprises a transmitter to transmit the plurality of parallel content streams across the multiple communication channels.

Optionally, the computer-based system further comprises a receiver to receive the plurality of parallel content streams, and a processor coupled to the receiver, and logic instructions stored in a tangible computer-readable medium coupled to the processor which, when executed by the processor, configure the processor to buffer the plurality of parallel content streams in a buffer, and combine the plurality of parallel content streams to create a combined content stream in the receiver.

Optionally, the computer-based system further comprises logic instructions stored in a tangible computer-readable medium coupled to the processor which, when executed by the processor, configure the processor to decode the combined content stream, and present the decoded combined content stream on a display.

With regard to the example, optionally, the computer program product further comprises logic instructions stored in a tangible computer-readable medium coupled to the processor which, when executed by the processor, configure the processor to determine whether multiple communication channels are available between the sender and the receiver, and in response to a determination that only a single communication channel is available, determine an available bandwidth on the single communication channel between the sender and the receiver, and select a content stream from the plurality of parallel content streams based at least in part on the bandwidth required by the content stream.

Optionally, the computer program product further comprises logic instructions stored in a tangible computer-readable medium coupled to a processor in a receiver which receives the content stream which, when executed by the processor, configure the processor to decode the content stream, and present the content stream on a display.

Optionally, the computer program product further comprises logic instructions stored in a tangible computer-readable medium coupled to the processor which, when executed by the processor, configure the processor to determine whether multiple communication channels are available between the sender and the receiver, and in response to a determination that multiple communication channels are available, determine an available bandwidth on the multiple communication channels between the sender and the receiver, and select a content stream from the plurality of parallel content streams for the respective multiple communication channels based at least in part on the bandwidth required by the content stream.

Optionally, the computer program product further comprises logic instructions stored in a tangible computer-readable medium coupled to a processor in a receiver which receives the content stream which, when executed by the processor, configure the processor to buffer the plurality of parallel content streams in a buffer; and combine the plurality of parallel content streams to create a combined content stream in the receiver. Optionally, the computer program product further comprises logic instructions stored in a tangible computer-readable medium coupled to a processor in a receiver which receives the content stream which, when executed by the processor, configure the processor to decode the combined content stream, and present the decoded combined content stream on a display.

Further areas of applicability will become apparent from the description provided herein. It should be understood that the description and specific examples are intended for purposes of illustration only and are not intended to limit the scope of the present disclosure

### Brief Description of the Drawings

Embodiments of methods and systems in accordance with the teachings of the present disclosure are described in detail below with reference to the following drawings.
Fig. 1 is a schematic illustration of a communication network in which adaptive multipath content streaming may be implemented, according to embodiments.
Fig. 2 is a schematic illustration of a computing device which may be adapted to implement a system and method for adaptive multipath content streaming in accordance with some embodiments.
Fig. 3 is a flowchart illustrating operations in a method for adaptive multipath content streaming according to embodiments.

### Detailed Description

Systems and methods for adaptive multipath content streaming are described herein. Specific details of certain embodiments are set forth in the following description and figures to provide a thorough understanding of such embodiments. One skilled in the art will understand, however, that alternate embodiments may be practiced without several of the details described in the following description.

Various embodiments described here are set in the context of streaming content from a content server to a receiver. In some embodiments the content server may be one component of a video capture and processing system which streams content from anywhere (for e.g. airport terminals, maintenance hangars) using mobile devices including fixed devices on mobile platforms. The streamed content may include text, pictures, audio and/or video. In accordance with embodiments described herein, a content streams may be divided into multiple different content streams, each of which includes a base layer and may include one or more additional layers of content. In some embodiments a determination is made regarding whether a multiple communication channels are available between the sender and the receiver and an approximation of available bandwidth on each communication channel is determined. The one or more content streams may be assigned to a communication channel which has a bandwidth available that most closely matches the bandwidth requirement of the content stream. This allows for efficient bandwidth allocation across the communication medium and builds redundancy into the system. In the event that multiple content streams are transmitted across multiple communication channels, the multiple content streams are combined in the receiver to form a combined content stream, which may be presented on a display.

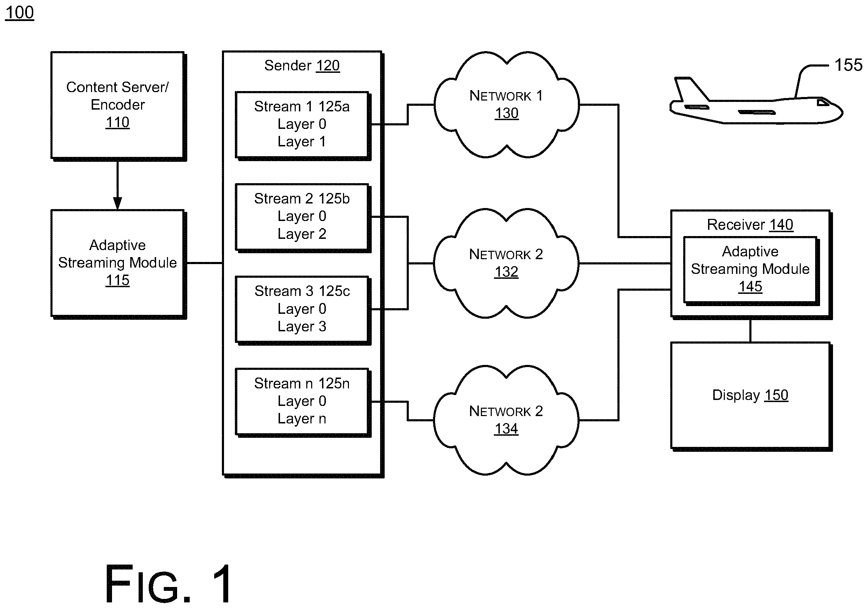

Fig. 1 is a schematic illustration of a system 100 for adaptive multipath content streaming according to embodiments. Referring to Fig. 1, in brief overview in one embodiment a content server and encoder 110. The content server and encoder 110 may be embodied as a computer system configured to encode video streams associated with digital content files. The encoder portion may encode the video streams in accordance with one or more protocols, which may be proprietary protocol or standards-based protocols. In accordance with embodiments, and adaptive streaming module 115 may be interposed between the content server/encoder 110 and a sender 120.

The adaptive streaming module 115 may implement operations which splits an encoded content stream into multiple content streams, which may be transmitted by the sender 120 over multiple networks 130, 132, 134. Communication networks 130, 132, 134 may be embodied as a as a Personal Area Network (PAN), Local Area Network (LAN), Metropolitan Area Network (MAN) or a Wide Area Network (WAN), a proprietary communication network, or the like. Furthermore, communication networks 130, 132, 134may comprise one or more sub-networks. By way of example, and not by limitation, communication networks 130, 132, 134 may comprise one or more access points (APs) that establish access to a LAN or directly to a backbone network such as the Internet. Additionally, the communication networks 130, 132, 134 may include a variety of input/output transports such as, but not limited to; wired USB or serial links, Wireless 802.11x link, wireless USB, Blue-tooth, infra-red links, cellular networks, or the like.

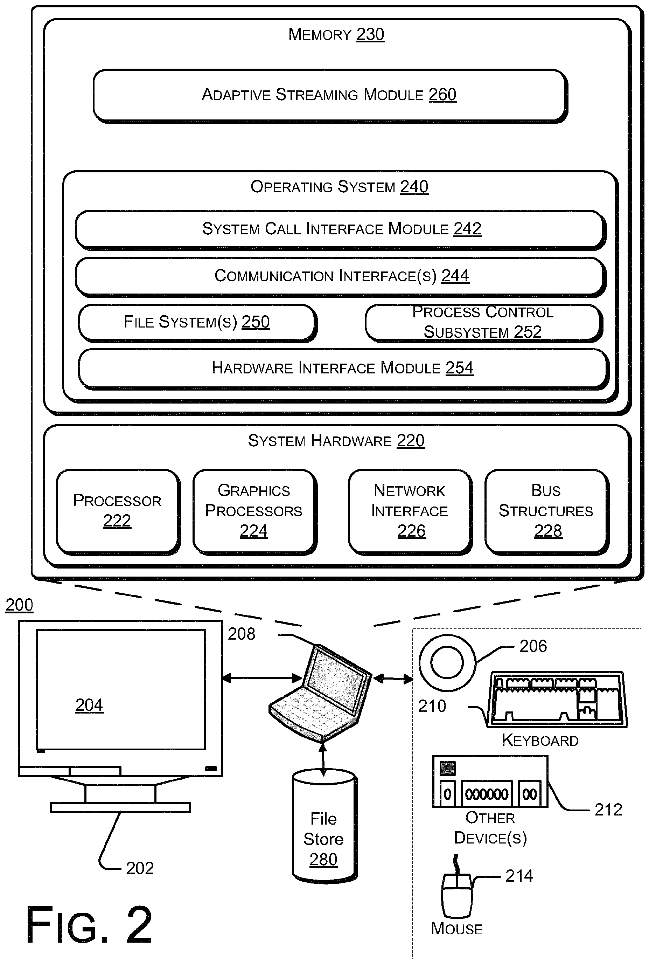

A receiver 140 includes a buffer/combiner 145, which combines the separate content streams into a combined content stream, which may be presented on a display 150. In some embodiments the receiver 140 and display 150 may be components of a vehicle, such as aircraft 155. Structural features and operations of the various components of the system 100 will be explained in greater detail with reference to Figs. 2-3.

In some embodiments both the various components of the system 100 depicted in Fig. 1 may be implemented in a computer system environment. Figure 2 is a schematic illustration of a computing system 200 which may be adapted to implement a content server/encoder 110 and adaptive streaming module 115 and the receiver 140 and display 150 in accordance with some embodiments. In one embodiment, system 200 includes a computing device 208 and one or more accompanying input/output devices including a display 202 having a screen 204, one or more speakers 206, a keyboard 210, one or more other I/O device(s) 212, and a mouse 214. The other I/O device(s) 212 may include a touch screen, a voice-activated input device, a track ball, and any other device that allows the system 200 to receive input from a user.

The computing device 208 includes system hardware 220 and memory 230, which may be implemented as random access memory and/or read-only memory. A file store 280 may be communicatively coupled to computing device 208. File store 280 may be internal to computing device 108 such as, e.g., one or more hard drives, CD-ROM drives, DVD-ROM drives, or other types of storage devices. File store 280 may also be external to computer 208 such as, e.g., one or more external hard drives, network attached storage, or a separate storage network.

System hardware 220 may include one or more processors 222, one or more graphics processors 224, network interfaces 226, and bus structures 228. As used herein, the term *"processor"* means any type of computational element, such as but not limited to, a microprocessor, a microcontroller, a complex instruction set computing (CISC) microprocessor, a reduced instruction set (RISC) microprocessor, a very long instruction word (VLIW) microprocessor, or any other type of processor or processing circuit.

Graphics processor(s) 224 may function as adjunct processors that manages graphics and/or video operations. Graphics processor(s) 224 may be integrated onto the motherboard of computing system 200 or may be coupled via an expansion slot on the motherboard.

In one embodiment, network interface 226 could be a wired interface such as an Ethernet interface (see, e.g., Institute of Electrical and Electronics Engineers/IEEE 802.3-2002) or a wireless interface such as an IEEE 802.11a, b or g-compliant interface (see, e.g., IEEE Standard for IT-Telecommunications and information exchange between systems LAN/MAN--Part II: Wireless LAN Medium Access Control (MAC) and Physical Layer (PHY) specifications Amendment 4: Further Higher Data Rate Extension in the 2.4 GHz Band, 802.11G-2003). Another example of a wireless interface would be a general packet radio service (GPRS) interface (see, e.g., Guidelines on GPRS Handset Requirements, Global System for Mobile Communications/GSM Association, Ver. 3.0.1, December 2002).

Bus structures 228 connect various components of system hardware 228. In one embodiment, bus structures 228 may be one or more of several types of bus structure(s) including a memory bus, a peripheral bus or external bus, and/or a local bus using any variety of available bus architectures including, but not limited to, 11-bit bus, Industrial Standard Architecture (ISA), Micro-Channel Architecture (MSA), Extended ISA (EISA), Intelligent Drive Electronics (IDE), VESA Local Bus (VLB), Peripheral Component Interconnect (PCI), Universal Serial Bus (USB), Advanced Graphics Port (AGP), Personal Computer Memory Card International Association bus (PCMCIA), and Small Computer Systems Interface (SCSI).

Memory 230 may include an operating system 240 for managing operations of computing device 208. In one embodiment, operating system 240 includes a hardware interface module 254 that provides an interface to system hardware 220. In addition, operating system 240 may include a file system 250 that manages files used in the operation of computing device 208 and a process control subsystem 252 that manages processes executing on computing device 208.

Operating system 240 may include (or manage) one or more communication interfaces that may operate in conjunction with system hardware 220 to transceive data packets and/or data streams from a remote source. Operating system 240 may further include a system call interface module 242 that provides an interface between the operating system 240 and one or more application modules resident in memory 130. Operating system 240 may be embodied as a Windows® brand operating system or as a UNIX operating system or any derivative thereof (e.g., Linux, Solaris, etc.), or other operating systems.

In one embodiment, memory 230 includes an adaptive streaming module 260, which may include logic instructions encoded in a tangible computer-readable medium which, when executed by processor 222, cause the processor 222 to implement adaptive streaming operations. Referring back to Fig. 1, in some embodiments the adaptive streaming module 260 may correspond to the adaptive streaming module 115 on the sending side of the network and to the adaptive streaming module 145 on the receiving side of the network.

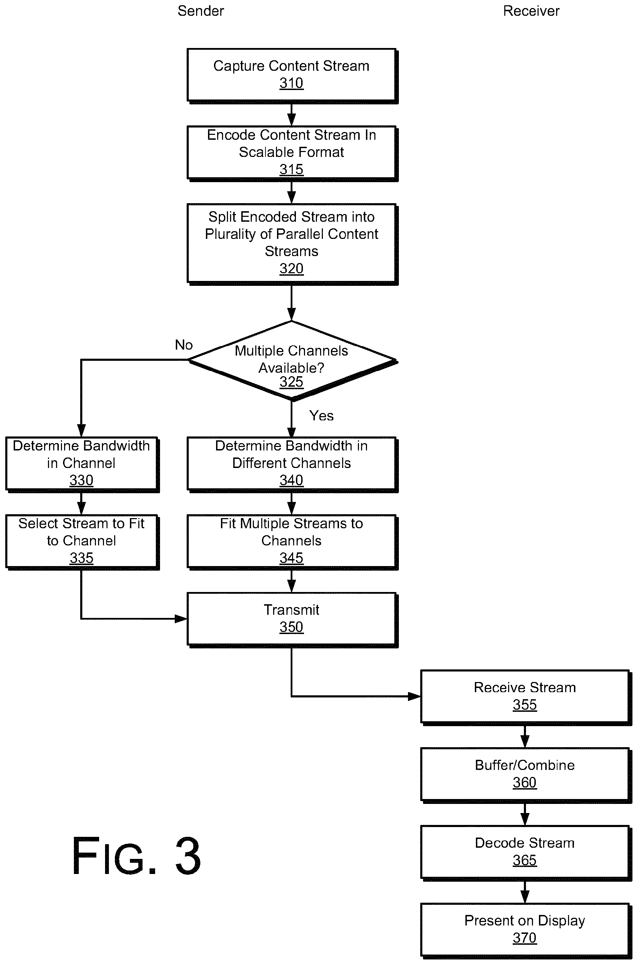

Fig. 3 is a flowchart illustrating operations in a method for adaptive content streaming according to embodiments. In some embodiments the operations on the sending side of the network may be implemented by the adaptive streaming module 115, alone or in cooperation with other components of the sender, while operations on the receiving side of the network may be implemented by the adaptive streaming module 145 in the receiver. In order to measure bandwidth between sender and receiver, the adaptive streaming module should be co-located with the sender (i.e., on same LAN segment of network; or being connected by a local high speed intranet)

Referring to Fig. 3, at operation 310 a content stream is captured and at operation 315 the content stream is encoded in a scalable format. In some embodiments the content server/encoder 110 may be configured to encode video streams in accordance with audio and video compression and transmission standards such as the Moving Picture Experts Group (MPEG) family of standards. Streamed video may be encoded and transmitted in Network Abstraction Layer Units (NAL units or NALUs). In some embodiments the content server/encoder 110 may implement a scalable encoding scheme pursuant to which video is encoded into a base layer (layer 0) which is compatible with non-scalable video encoding schemes such as the H.264 MPEG scheme and one or more additional layers (layer 1, layer 2 ... layer n). The base layer (layer 0) includes all information required to transmit and decode a video stream including a Sequence Parameter Set (SPS) NAL unit which contains information such as the aspect ratio, video format, timing information, etc., and a Picture Parameter Set (PPS) NAL unit which contains information such as coding for compression, etc. Each additional layers (layer 1, layer 2, ... layer n) may include a subset sequence parameter set (SUBSPS) NAL unit which identifies characteristics of the respective additional layer.

At operation 320 the encoded content stream is split into a plurality of parallel content streams. Referring briefly to Fig. 1, in some embodiments the adaptive streaming module 115 may be interposed between the content server/encoder 110 and a sender 120. The adaptive streaming module 115 may implement operations which define a plurality of parallel content streams. Each content stream includes a base layer (layer 0) and one or more additional layers. Thus, in the embodiment depicted in Fig. 1 the adaptive streaming module generates content stream 1 125a which includes the base layer (layer 0) and additional layer 1, stream 2 125b which includes the base layer (layer 0) and additional layer 2, stream 3 125c which includes the base layer (layer 0) and additional layer 3, up to layer n which includes the base layer (layer 0) and additional layer n.

At operation 325 it is determined whether there are multiple communication channels available between the sender and the receiver. In some embodiments there may be multiple communication channels between the sender and the receiver via the multiple networks 130, 132, 134. By way of example, in some embodiments the adaptive streaming module 115 may track the available communication channels between the sender 120 and receiver 140.

If, at operation 325, there is only a single communication channel available then control passes to operation 330 and the available bandwidth in the single communication channel between the sender 120 and the receiver is determined. By way of example, in some embodiments the adaptive streaming module 115 may track the available bandwidth on the communication channel between the sender 120 and receiver 140. Control then passes to operation 335 and the adaptive streaming module 115 selects a stream from the plurality of parallel content streams to transmit via the communication channel. In some embodiments the adaptive streaming module 115 may implement a best-available quality procedure which selects the highest bandwidth content stream that fits within the available bandwidth on the communication channel. In other embodiments the adaptive streaming module may simply select any content stream which fits the available bandwidth on the communication channel.

Referring back to operation 325, if there are multiple channels available then control passes to operation 340 and the available bandwidth in all the available communication channels between the sender 120 and the receiver is determined. By way of example, in some embodiments the adaptive streaming module 115 may track the available bandwidth on the communication channels between the sender 120 and receiver 140. Control then passes to operation 345 and the adaptive streaming module 115 fits multiple content streams from the plurality of parallel content streams to transmit via the communication channels. Again, in some embodiments the adaptive streaming module 115 may implement a best-available quality procedure which selects the highest bandwidth content stream that fits within the available bandwidth of the given communication channel. In other embodiments the adaptive streaming module may simply select any content stream which fits the available bandwidth on the communication channel.

At operation 350 the content stream(s) assigned for transmission from the sender 120 to the receiver 140 are transmitted from the sender 120. At operation 355 the receiver 140 receives the content stream(s). In some embodiments the adaptive streaming module 145 on the receiver 140 include logic to manage buffering the content stream(s) in memory. At operation 360 the content stream(s) are buffered and, if there are multiple streams then the content streams are combined into a combined content stream.

At operation 365 the combined content stream may be decoded, e.g., by a conventional video decoder, and at operation 370 the decoded combined content stream may be presented on a user interface, e.g., a display coupled to the receiver.

In the foregoing discussion, specific implementations of exemplary processes have been described, however, it should be understood that in alternate implementations, certain acts need not be performed in the order described above. In alternate embodiments, some acts may be modified, performed in a different order, or may be omitted entirely, depending on the circumstances. Moreover, in various alternate implementations, the acts described may be implemented by a computer, controller, processor, programmable device, firmware, or any other suitable device, and may be based on instructions stored on one or more computer-readable media or otherwise stored or programmed into such devices (e.g. including transmitting computer-readable instructions in real time to such devices). In the context of software, the acts described above may represent computer instructions that, when executed by one or more processors, perform the recited operations. In the event that computer-readable media are used, the computer-readable media can be any available media that can be accessed by a device to implement the instructions stored thereon.

While various embodiments have been described, those skilled in the art will recognize modifications or variations which might be made without departing from the present disclosure. The examples illustrate the various embodiments and are not intended to limit the present disclosure. Therefore, the description and claims should be interpreted liberally with only such limitation as is necessary in view of the pertinent prior art.

## Claims

1. A computer-based method to manage content streaming from a sender (120) to a receiver (140) through multiple networks (130, 132, 134), comprising:
splitting an encoded content stream into a plurality of parallel content streams (125a, 125b, 125c, ..., 125n) including a first content stream (125a) and a second content stream (125b), wherein the first content stream (125a) comprises a base layer (0) and at least a first additional layer (1), wherein the base layer (0) contains a low-bandwidth content stream and reference information for additional layers, and wherein the second content stream (125b) comprises the base layer (0) and at least a second additional layer (2); and
transmitting at least one of the first content stream (125a) or the second content stream (125b) from the sender (120) to the receiver (140) based at least in part on an available bandwidth parameter.

2. The method of claim 1, further comprising:
determining whether multiple communication channels are available between the sender (120) and the receiver (140), and in response to a determination that only a single communication channel is available:
determining an available bandwidth on the single communication channel between the sender (120) and the receiver (140); and
selecting a content stream from the plurality of parallel content streams (125a, 125b, 125c, ..., 125n) based at least in part on the bandwidth required by the content stream.

3. The method of claim 2, further comprising:
receiving the content stream in the receiver (140);
decoding the content stream; and
presenting the content stream on a display (202).

4. The method of any of claims 1 to 3, further comprising:
determining whether multiple communication channels are available between the sender (120) and the receiver (140), and in response to a determination that multiple communication channels are available:
determining an available bandwidth on the multiple communication channels between the sender (120) and the receiver (140); and
selecting a content stream from the plurality of parallel content streams (125a, 125b, 125c, ..., 125n) for the respective multiple communication channels based at least in part on the bandwidth required by the content stream.

5. The method of claim 4, further comprising:
transmitting the plurality of parallel content streams (125a, 125b, 125c, ..., 125n) across the multiple communication channels.

6. The method of claim 5, further comprising:
receiving the plurality of parallel content streams (125a, 125b, 125c, ..., 125n) in the receiver (140);
buffering the plurality of parallel content streams (125a, 125b, 125c, ..., 125n) in a buffer (145); and
combining the plurality of parallel content streams (125a, 125b, 125c, ..., 125n) to create a combined content stream in the receiver (140).

7. The method of claim 6, further comprising:
decoding the combined content stream; and
presenting the decoded combined content stream on a display (202).

8. A computer-based system to manage content streaming from a sender (120) to a receiver (140) through multiple networks (130, 132, 134), comprising:
a processor (222);
logic instructions stored in a tangible computer-readable medium coupled to the processor (222) which, when executed by the processor (222), configure the processor (222) to split an encoded content stream into a plurality of parallel content streams (125a, 125b, 125c, ..., 125n) including a first content stream (125a) and a second content stream (125b), wherein the first content stream (125a) comprises a base layer (0) and at least a first additional layer (1), wherein the base layer (0) contains a low-bandwidth content stream and reference information for additional layers, and wherein the second content stream (125b) comprises the base layer (0) and at least a second additional layer (2); and
a transmitter to transmit at least one of the first content stream (125a) or the second content stream (125b) from the sender (120) to the receiver (140) based at least in part on an available bandwidth parameter.

9. The computer-based system of claim 8, further comprising logic instructions stored in a tangible computer-readable medium coupled to the processor (222) which, when executed by the processor (222), configure the processor (222) to:
determine whether multiple communication channels are available between the sender (120) and the receiver (140), and in response to a determination that only a single communication channel is available:
determine an available bandwidth on the single communication channel between the sender (120) and the receiver (140); and
select a content stream from the plurality of parallel content streams (125a, 125b, 125c, ..., 125n) based at least in part on the bandwidth required by the content stream.

10. The computer-based system of claim 9, further comprising:
a receiver (140) to receive the content stream;
a processor (222) coupled to the receiver (140); and
logic instructions stored in a tangible computer-readable medium coupled to the processor (222) which, when executed by the processor (222), configure the processor (222) to:
decode the content stream; and
present the content stream on a display (202).

11. The computer-based system of any of claims 8 to 10, further comprising logic instructions stored in a tangible computer-readable medium coupled to the processor (222) which, when executed by the processor (222), configure the processor (222) to:
determine whether multiple communication channels are available between the sender (120) and the receiver (140), and in response to a determination that multiple communication channels are available:
determine an available bandwidth on the multiple communication channels between the sender (120) and the receiver (140); and
select a content stream from the plurality of parallel content streams (125a, 125b, 125c, ..., 125n) for the respective multiple communication channels based at least in part on the bandwidth required by the content stream.

12. The computer-based system of claim 11, further comprising:
a transmitter to transmit the plurality of parallel content streams (125a, 125b, 125c, ..., 125n) across the multiple communication channels.

13. The computer-based system of claim 12, further comprising:
a receiver (140) to receive the plurality of parallel content streams (125a, 125b, 125c, ..., 125n); and
a processor (222) coupled to the receiver (140); and
logic instructions stored in a tangible computer-readable medium coupled to the processor (222) which, when executed by the processor (222), configure the processor (222) to:
buffer (145) the plurality of parallel content streams (125a, 125b, 125c, ..., 125n) in a buffer (145); and
combine the plurality of parallel content streams (125a, 125b, 125c, ..., 125n) to create a combined content stream in the receiver (140).

14. The computer-based system of claim 13, further comprising logic instructions stored in a tangible computer-readable medium coupled to the processor (222) which, when executed by the processor (222), configure the processor (222) to:
decode the combined content stream; and
present the decoded combined content stream on a display (202).

## Patentansprüche

1. Computergestütztes Verfahren zur Verwaltung von Content-Streaming von einem Sender (120) zu einem Empfänger (140) über mehrere Netzwerke (130, 132, 134), umfassend:
Aufteilen eines codierten Content-Stroms in eine Mehrzahl von parallelen Content-Strömen (125a, 125b, 125c, 125n) einschließlich eines ersten Content-Stroms (125a) und eines zweiten Content-Stroms (125b), wobei der erste Content-Strom (125a) eine Basisschicht (0) und mindestens eine erste zusätzliche Schicht (1) umfasst, wobei die Basisschicht (0) einen Content-Strom mit niedriger Bandbreite und Referenzinformation für zusätzliche Schichten enthält, und wobei der zweite Content-Strom (125b) die Basisschicht (0) und mindestens eine zweite zusätzliche Schicht (2) umfasst; und
Senden des ersten Content-Stroms (125a) und/oder des zweiten Content-Stroms (125b) von dem Sender (120) zu dem Empfänger (140), basierend mindestens teilweise auf einem verfügbaren Bandbreitenparameter.

2. Verfahren nach Anspruch 1, ferner umfassend:
Bestimmen, ob zwischen dem Sender (120) und dem Empfänger (140) mehrere Kommunikationskanäle verfügbar sind, und als Reaktion auf eine Bestimmung, dass nur ein einziger Kommunikationskanal verfügbar ist:
Bestimmen einer verfügbaren Bandbreite auf dem einzigen Kommunikationskanal zwischen dem Sender (120) und dem Empfänger (140); und
Auswählen eines Content-Stroms aus der Mehrzahl von parallelen Content-Strömen (125a, 125b, 125c, 125n) zumindest teilweise basierend auf der vom Content-Strom benötigten Bandbreite.

3. Verfahren nach Anspruch 2, ferner umfassend:
Empfangen des Content-Stroms im Empfänger (140);
Decodieren des Content-Stroms ; und
Darstellen des Content-Stroms auf einer Anzeige (202).

4. Verfahren nach einem der Ansprüche 1 bis 3, ferner umfassend:
Bestimmen, ob mehrere Kommunikationskanäle zwischen dem Sender (120) und dem Empfänger (140) verfügbar sind, und als Reaktion auf eine Bestimmung, dass mehrere Kommunikationskanäle verfügbar sind:
Bestimmen einer verfügbaren Bandbreite auf den mehreren Kommunikationskanälen zwischen dem Sender (120) und dem Empfänger (140); und
Auswählen eines Content-Stroms aus der Mehrzahl von parallelen Content-Strömen (125a, 125b, 125c, 125n) für die jeweiligen mehreren Kommunikationskanäle basierend zumindest teilweise auf der vom Content-Strom benötigten Bandbreite.

5. Verfahren nach Anspruch 4, ferner umfassend:
Senden der Mehrzahl von parallelen Content-Strömen (125a, 125b, 125c, 125n) über die mehreren Kommunikationskanäle.

6. Verfahren nach Anspruch 5, ferner umfassend:
Empfangen der Mehrzahl von parallelen Content-Strömen (125a, 125b, 125c, 125n) im Empfänger (140);
Puffern der Mehrzahl von parallelen Content-Strömen (125a, 125b, 125c, 125n) in einem Puffer (145); und
Kombinieren der Mehrzahl von parallelen Content-Strömen (125a, 125b, 125c, 125n), um im Empfänger (140) einen kombinierten Content-Strom zu erzeugen.

7. Verfahren nach Anspruch 6, ferner umfassend:
Decodieren des kombinierten Content-Stroms; und
Darstellen des decodierten kombinierten Content-Stroms auf einer Anzeige (202).

8. Computergestütztes System zum Verwalten von Content-Streaming von einem Sender (120) zu einem Empfänger (140) über mehrere Netzwerke (130, 132, 134), umfassend:
einen Prozessor (222);
Logikbefehle, die in einem mit dem Prozessor (222) gekoppelten physischen computerlesbaren Medium gespeichert sind, die, wenn sie von dem Prozessor (222) ausgeführt werden, den Prozessor (222) so konfigurieren, dass er einen codierten Content-Strom in mehrere parallele Content-Ströme (125a, 125b, 125c, 125n) einschließlich eines ersten Content-Stroms (125a) und eines zweiten Content-Stroms (125b) aufteilt, wobei der erste Content-Strom (125a) eine Basisschicht (0) und mindestens eine erste zusätzliche Schicht (1) umfasst, wobei die Basisschicht (0) einen Content-Strom mit niedriger Bandbreite und Referenzinformation für zusätzliche Schichten enthält, und wobei der zweite Content-Strom (125b) die Basisschicht (0) und mindestens eine zweite zusätzliche Schicht (2) umfasst; und
einen Sender zum Senden des ersten Content-Stroms (125a) und/oder des zweiten Content-Stroms (125b) von dem Sender (120) zu dem Empfänger (140) basierend zumindest teilweise auf einem verfügbaren Bandbreitenparameter.

9. Computergestütztes System nach Anspruch 8, ferner mit logischen Anweisungen, die in einem mit dem Prozessor (222) gekoppelten physischen computerlesbaren Medium gespeichert sind und die, wenn sie von dem Prozessor (222) ausgeführt werden, den Prozessor (222) konfigurieren, um
zu bestimmen, ob mehrere Kommunikationskanäle zwischen dem Sender (120) und dem Empfänger (140) verfügbar sind, und als Reaktion auf eine Bestimmung, dass nur ein einziger Kommunikationskanal verfügbar ist:
eine verfügbare Bandbreite auf dem einzigen Kommunikationskanal zwischen dem Sender (120) und dem Empfänger (140) zu bestimmen; und
einen Content-Strom aus der Mehrzahl von parallelen Content-Strömen (125a, 125b, 125c, 125n) zumindest teilweise basierend auf der vom Content-Strom benötigten Bandbreite auszuwählen.

10. Computergestütztes System nach Anspruch 9, ferner umfassend:
einen Empfänger (140) zum Empfangen des Content-Stroms;
einen mit dem Empfänger (140) gekoppelten Prozessor (222); und
logische Befehle, die in einem mit dem Prozessor (222) gekoppelten greifbaren, computerlesbaren Medium gespeichert sind und die, wenn sie vom Prozessor (222) ausgeführt werden, den Prozessor (222) konfigurieren, um:
den Content-Strom zu decodieren; und
den Content-Strom auf einer Anzeige (202) zu präsentieren.

11. Computergestütztes System nach einem der Ansprüche 8 bis 10, ferner mit logischen Befehlen, die in einem mit dem Prozessor (222) gekoppelten physischen, computerlesbaren Medium gespeichert sind, und die, wenn sie von dem Prozessor (222) ausgeführt werden, den Prozessor (222) konfigurieren, um:
zu bestimmen, ob mehrere Kommunikationskanäle zwischen dem Sender (120) und dem Empfänger (140) verfügbar sind, und als Reaktion auf eine Bestimmung, dass mehrere Kommunikationskanäle verfügbar sind:
eine verfügbare Bandbreite auf den mehreren Kommunikationskanälen zwischen dem Sender (120) und dem Empfänger (140) zu bestimmen; und
einen Content-Strom aus der Mehrzahl von parallelen Content-Strömen (125a, 125b, 125c, 125n) für die jeweiligen mehreren Kommunikationskanäle zumindest teilweise basierend auf der vom Content-Strom benötigten Bandbreite auszuwählen.

12. Computergestütztes System nach Anspruch 11, ferner umfassend:
einen Sender zum Senden der mehreren parallelen Content-Ströme (125a, 125b, 125c, 125n) über die mehreren Kommunikationskanäle.

13. Computergestütztes System nach Anspruch 12, ferner umfassend:
einen Empfänger (140) zum Empfangen der Mehrzahl von parallelen Content-Strömen (125a, 125b, 125c, 125n); und
einen Prozessor (222), der mit dem Empfänger (140) gekoppelt ist; und
logische Befehle, die in einem mit dem Prozessor (222) gekoppelten physischen, computerlesbaren Medium gespeichert sind und die, wenn sie von dem Prozessor (222) ausgeführt werden, den Prozessor (222) konfigurieren, um
die Mehrzahl von parallelen Content-Strömen (125a, 125b, 125c, 125n) in einem Puffer (145) zu puffern; und
die Mehrzahl von parallelen Content-Strömen (125a, 125b, 125c, 125n) zu kombinieren, um einen kombinierten Content-Strom im Empfänger (140) zu erzeugen.

14. Computergestütztes System nach Anspruch 13, ferner mit logischen Befehlen, die in einem mit dem Prozessor (222) gekoppelten physischen, computerlesbaren Medium gespeichert sind, und die, wenn sie von dem Prozessor (222) ausgeführt werden, den Prozessor (222) konfigurieren, um:
den kombinierten Content-Strom zu decodieren; und
den decodierten kombinierten Content-Strom auf einer Anzeige (202) darzustellen.

## Revendications

1. Procédé informatique pour gérer une diffusion en flux de contenu d'un émetteur (120) à un récepteur (140) via de multiples réseaux (130, 132, 134), comprenant les étapes consistant à :
diviser un flux de contenu codé en une pluralité de flux de contenu parallèles (125a, 125b, 125c, ..., 125n) comprenant un premier flux de contenu (125a) et un second flux de contenu (125b), dans lequel le premier flux de contenu (125a) comprend une couche de base (0) et au moins une première couche supplémentaire (1), dans lequel la couche de base (0) contient un flux de contenu à faible bande passante et des informations de référence pour des couches supplémentaires, et dans lequel le second flux de contenu (125b) comprend la couche de base (0) et au moins une seconde couche supplémentaire (2) ; et
transmettre au moins l'un du premier flux de contenu (125a) ou du second flux de contenu (125b) de l'émetteur (120) au récepteur (140) sur la base au moins en partie d'un paramètre de bande passante disponible.

2. Procédé selon la revendication 1, comprenant en outre les étapes consistant à :
déterminer si de multiples canaux de communication sont disponibles entre l'émetteur (120) et le récepteur (140), et en réponse à une détermination que seul un canal de communication unique est disponible :
déterminer une bande passante disponible sur le canal de communication unique entre l'émetteur (120) et le récepteur (140) ; et
sélectionner un flux de contenu parmi la pluralité de flux de contenu parallèles (125a, 125b, 125c, ..., 125n) sur la base au moins en partie de la bande passante requise par le flux de contenu.

3. Procédé selon la revendication 2, comprenant en outre les étapes consistant à :
recevoir le flux de contenu dans le récepteur (140) ;
décoder le flux de contenu ; et
présenter le flux de contenu sur un affichage (202).

4. Procédé selon l'une quelconque des revendications 1 à 3, comprenant en outre les étapes consistant à :
déterminer si de multiples canaux de communication sont disponibles entre l'émetteur (120) et le récepteur (140), et en réponse à une détermination que de multiples canaux de communication sont disponibles :
déterminer une bande passante disponible sur les multiples canaux de communication entre l'émetteur (120) et le récepteur (140) ; et
sélectionner un flux de contenu parmi la pluralité de flux de contenu parallèles (125a, 125b, 125c, ..., 125n) pour les multiples canaux de communication respectifs sur la base au moins en partie de la bande passante requise par le flux de contenu.

5. Procédé selon la revendication 4, comprenant en outre l'étape consistant à :
transmettre la pluralité de flux de contenu parallèles (125a, 125b, 125c, ..., 125n) à travers les multiples canaux de communication.

6. Procédé selon la revendication 5, comprenant en outre les étapes consistant à :
recevoir la pluralité de flux de contenu parallèles (125a, 125b, 125c, ..., 125n) dans le récepteur (140) ;
mettre en mémoire tampon la pluralité de flux de contenu parallèles (125a, 125b, 125c, ..., 125n) dans une mémoire tampon (145) ; et
combiner la pluralité de flux de contenu parallèles (125a, 125b, 125c, ..., 125n) pour créer un flux de contenu combiné dans le récepteur (140).

7. Procédé selon la revendication 6, comprenant en outre les étapes consistant à :
décoder le flux de contenu combiné ; et
présenter le flux de contenu combiné décodé sur un affichage (202).

8. Système informatique pour gérer une diffusion en flux de contenu d'un émetteur (120) vers un récepteur (140) via de multiples réseaux (130, 132, 134), comprenant :
un processeur (222) ;
des instructions logiques stockées dans un support tangible lisible par ordinateur couplé au processeur (222) qui, lorsqu'elles sont exécutées par le processeur (222), configurent le processeur (222) pour diviser un flux de contenu codé en une pluralité de flux de contenu parallèles (125a, 125b, 125c, ..., 125n) comprenant un premier flux de contenu (125a) et un second flux de contenu (125b), dans lequel le premier flux de contenu (125a) comprend une couche de base (0) et au moins une première couche supplémentaire (1), dans lequel la couche de base (0) contient un flux de contenu à faible bande passante et des informations de référence pour des couches supplémentaires, et dans lequel le second flux de contenu (125b) comprend la couche de base (0) et au moins une seconde couche supplémentaire (2) ; et
un transmetteur pour transmettre au moins un parmi le premier flux de contenu (125a) ou le second flux de contenu (125b) de l'émetteur (120) au récepteur (140) sur la base au moins en partie d'un paramètre de bande passante disponible.

9. Système informatique selon la revendication 8, comprenant en outre des instructions logiques stockées dans un support tangible lisible par ordinateur couplé au processeur (222) qui, lorsqu'elles sont exécutées par le processeur (222), configurent le processeur (222) pour :
déterminer si de multiples canaux de communication sont disponibles entre l'émetteur (120) et le récepteur (140), et en réponse à une détermination que seulement un canal de communication unique est disponible :
déterminer une bande passante disponible sur le canal de communication unique entre l'émetteur (120) et le récepteur (140) ; et
sélectionner un flux de contenu parmi la pluralité de flux de contenu parallèles (125a, 125b, 125c, ..., 125n) sur la base au moins en partie de la bande passante requise par le flux de contenu.

10. Système informatique selon la revendication 9, comprenant en outre :
un récepteur (140) pour recevoir le flux de contenu ;
un processeur (222) couplé au récepteur (140) ; et
des instructions logiques stockées dans un support tangible lisible par ordinateur couplé au processeur (222) qui, lorsqu'elles sont exécutées par le processeur (222), configurent le processeur (222) pour :
décoder le flux de contenu ; et
présenter le flux de contenu sur un affichage (202).

11. Système informatique selon l'une quelconque des revendications 8 à 10, comprenant en outre des instructions logiques stockées dans un support tangible lisible par ordinateur couplé au processeur (222) qui, lorsqu'elles sont exécutées par le processeur (222), configurent le processeur (222) à :
déterminer si de multiples canaux de communication sont disponibles entre l'émetteur (120) et le récepteur (140), et en réponse à une détermination que de multiples canaux de communication sont disponibles :
déterminer une bande passante disponible sur les multiples canaux de communication entre l'émetteur (120) et le récepteur (140) ; et
sélectionner un flux de contenu parmi la pluralité de flux de contenu parallèles (125a, 125b, 125c, ..., 125n) pour les multiples canaux de communication respectifs sur la base au moins en partie de la bande passante requise par le flux de contenu.

12. Système informatique selon la revendication 11, comprenant en outre :
un transmetteur pour transmettre la pluralité de flux de contenu parallèles (125a, 125b, 125c, ..., 125n) sur les multiples canaux de communication.

13. Système informatique selon la revendication 12, comprenant en outre :
un récepteur (140) pour recevoir la pluralité de flux de contenu parallèles (125a, 125b, 125c, ..., 125n) ; et
un processeur (222) couplé au récepteur (140) ; et
des instructions logiques stockées dans un support tangible lisible par ordinateur couplé au processeur (222) qui, lorsqu'elles sont exécutées par le processeur (222), configurent le processeur (222) pour :
mettre en mémoire tampon (145) la pluralité de flux de contenu parallèles (125a, 125b, 125c, ..., 125n) dans une mémoire tampon (145) ; et
combiner la pluralité de flux de contenu parallèles (125a, 125b, 125c, ..., 125n) pour créer un flux de contenu combiné dans le récepteur (140).

14. Système informatique selon la revendication 13, comprenant en outre des instructions logiques stockées dans un support tangible lisible par ordinateur couplé au processeur (222) qui, lorsqu'elles sont exécutées par le processeur (222), configurent le processeur (222) pour :
décoder le flux de contenu combiné ; et
présenter le flux de contenu combiné décodé sur un affichage (202).
